Europäisches Patentamt

European Patent Office

Office européen des brevets

(11) Numéro de publication: **0 192 501 B1**

# FASCICULE DE BREVET EUROPEEN

(45) Date de publication de fascicule du brevet: **25.03.92**    (51) Int. Cl.⁵: **F24F 3/14**

(21) Numéro de dépôt: **86400064.1**

(22) Date de dépôt: **14.01.86**

(54) **Dispositif de conditionnement d'air.**

(30) Priorité: **18.01.85 FR 8500740**

(43) Date de publication de la demande:
**27.08.86 Bulletin 86/35**

(45) Mention de la délivrance du brevet:
**25.03.92 Bulletin 92/13**

(84) Etats contractants désignés:
**DE GB IT**

(56) Documents cités:
| | |
|---|---|
| EP-A- 0 035 909 | FR-A- 864 531 |
| FR-A- 1 115 735 | FR-A- 2 148 441 |
| FR-A- 2 234 041 | FR-A- 2 278 043 |
| FR-A- 2 486 210 | FR-A- 2 532 408 |
| US-A- 2 585 570 | US-A- 3 619 987 |
| US-A- 4 480 444 | |

(73) Titulaire: **ABG SEMCA**
**3, Villa Thoréton**
**F-75015 Paris(FR)**

(72) Inventeur: **Signoret, Jacques**
**THOMSON-CSF SCPI 19, avenue de Messine**
**F-75008 Paris(FR)**

(74) Mandataire: **Grynwald, Albert et al**
**THOMSON-CSF SCPI**
**F-92045 PARIS LA DEFENSE CEDEX 67(FR)**

## Description

La présente invention concerne un dispositif de conditionnement d'air. Elle trouve application dans le contrôle d'environnement, notamment, en climatisation aéronautique ou de véhicules.

Dans l'art antérieur du cycle à air, on sait réaliser des climatiseurs qui comportent un compresseur qui aspire de l'atmosphère extérieure pour la refouler sur un échangeur capable d'abaisser sa température tout on gardant sa pression aux pertes de charge près. L'atmosphère refroidie subit un refroidissement supplémentaire par détente dans une roue de turbine qui refoule dans une enceinte à climatiser. Cette succession d'opérations thermodynamiques entraîne l'apparition d'eau liquide, produit de condensation de la vapeur d'eau contenue dans l'air à l'entrée du compresseur. Les vannes d'accès de l'enceinte à climatiser peuvent ainsi être obstruées par du givre. Pour porter remède à cet inconvénient, l'art antérieur, notamment le brevet FR-A-2532 408, a déjà proposé d'utiliser un extracteur d'eau placé entre l'échangeur et la turbine de détente ou entre la turbine de détente et l'enceinte à climatiser. D'autres systèmes combinent ces deux arrangements. La technique d'extraction consiste cependant en une seule collation de l'eau liquide dans l'échangeur.

L'invention est un perfectionnement notable à ces techniques par extraction d'eau notamment un perfectionnement au dispositif de conditionnement d'air.

En effet, l'invention concerne un dispositif de conditionnement d'air d'une enceinte d'aéronef comportant, mis en série, un compresseur, un échangeur, un dessiccateur, un extracteur d'eau et une turbine de détente, le dessiccateur comprenant au moins deux parties dessiccatrices, caractérisé en ce qu'il comporte des moyens pour diriger successivement la totalité de l'air de refroidissement provenant du compresseur à travers :

- la première partie du dessiccateur pour régénérer celui-ci ;
- l'échangeur de chaleur ;
- l'extracteur d'eau ;
- la deuxième partie du dessiccateur pour obtenir une dessiccation complète de l'air ;

lesdits moyens permettant d'échanger la première partie du dessiccateur avec la deuxième partie.

D'autres avantages et caractéristiques de la présente invention apparaîtront à l'aide de la description et des figures annexées qui sont :

- la figure 1 un schéma général d'un climatiseur selon l'art antérieur,
- la figure 2 un schéma de principe d'un climatiseur selon l'art antérieur,
- la figure 3 un schéma d'une partie d'un climatiseur selon une variante d'exécution applicable à un climatiseur conforme à l'invention,
- la figure 4 le schéma d'une partie d'un climatiseur conforme à l'invention,
- la figure 5 un mode de réalisation particulier d'un composant d'un climatiseur selon l'invention.

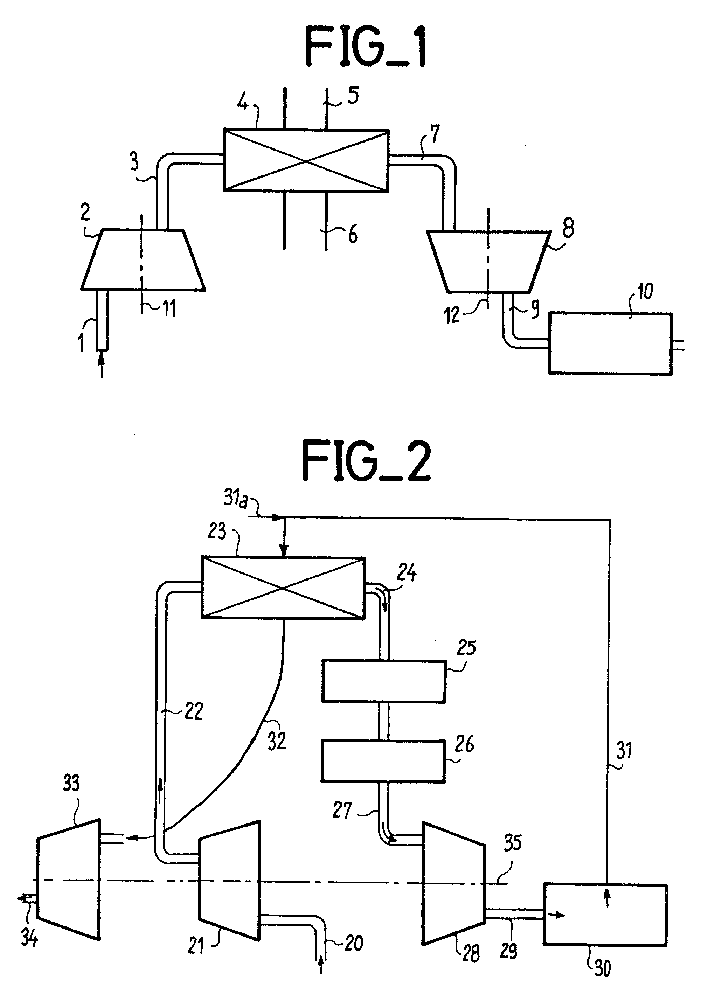

A la figure 1 on a représenté un climatiseur selon l'art antérieur. L'atmosphère extérieure, comme de l'air atmosphérique par exemple, entre par une canalisation d'accès 1 dans un compresseur 2. Le compresseur comporte un arbre 11 motorisé qui élève la pression et la température de l'air aspiré. La sortie 3 du compresseur 2 est fournie à l'entrée d'un échangeur 4. L'échangeur 4 reçoit un fluide frigorigène qui élimine les calories transportées par le flux entrant 3. Le fluide frigorigène est transmis d'une pipe d'entrée 5 à une pipe de sortie 6. La canalisation 7 de sortie de l'échangeur est fournie à une turbine de détente 8 dont l'arbre moteur 12 peut être commun avec celui du compresseur 2. La sortie de la turbine 8 est fournie à l'enceinte 10 à climatiser à travers un séparateur d'eau non représenté.

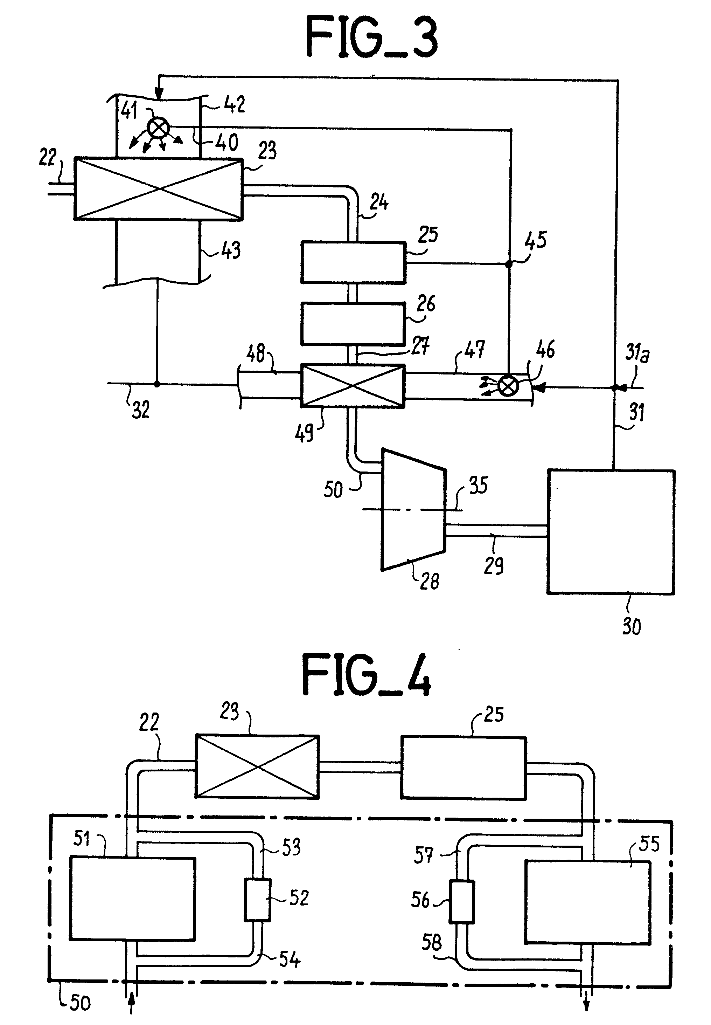

A la figure 2, on a représenté un autre mode de réalisation d'un climatiseur, non convert par l'objet des revendications. Selon le schéma, un premier compresseur 21 aspire en 20 l'air extérieur ou de l'air préalablement comprimé et le fournit par une canalisation 22 à l'échangeur 23. L'air préalablement comprimé puis refroidi dans l'échangeur 23 est fourni à un extracteur d'eau 25 qui prélève l'eau de condensation en phase liquide issue de l'échangeur 23. L'air traverse ensuite un dessiccateur 26 qui absorbe l'eau non extraite en phase liquide et une partie de l'eau en phase vapeur. Un dessiccateur convenable peut être du genre à tamis moléculaire. La sortie du dessiccateur est fournie à l'entrée de la turbine de détente 28. La sortie de la turbine de détente 28 est connectée à l'enceinte 30 à climatiser. La circulation de fluide frigorigène dans l'échangeur 23 peut être assurée par un ventilateur ou une pompe qui peut être montée sur le même arbre 35 que le compresseur 21 et la turbine 28.

De plus, un ventilateur 33 permet d'aspirer de l'air vicié dans l'enceinte 30 pour le rejeter vers l'extérieur. Pour cela, la canalisation d'entrée du ventilateur 33 est connectée à une canalisation 31 de sortie de l'enceinte à climatiser 30. Cette canalisation en 31 sert, après mélange 31 a avec de l'air extérieur, à refroidir l'échangeur 23. Elle est donc fournie à l'entrée frigorigène de l'échangeur 23 dont la sortie 32 est alors connectée à l'entrée du ventilateur 33. Le ventilateur 33 rejette l'air vicié 34. Les trois unités 21, 28 et

2

33 sont motorisés par un arbre unique 35. On constate que l'enthalpie à la sortie de l'échangeur 23 est notablement diminuée sans perte supplémentaire dans le cycle. On a constaté aussi que le dessiccateur 26 et l'échangeur 23 fournissent un gain important d'enthalpie par unité d'air pompé par rapport au schéma classique tout en assurant l'abaissement de teneur en vapeur d'eau. Cette différence d'enthalpie est rejetée à l'air ambiant extérieur par l'échangeur 23. La perte de charge supplémentaire à l'entrée de la turbine 28 est compensée par la suppression de la perte due au séparateur d eau qui est classiquement disposé en aval. Ce séparateur d eau selon l'art antérieur était généralement disposé entre la turbine de détente 8 et l'enceinte 10 de la figure 1. Il permettait d'éviter la formation rapide de givre à l'entrée de l'enceinte à climatiser. On constate ainsi que l'enthalpie de sortie est plus basse et que la puissance frigorifique est augmentée. Pour une puissance frigorifique donnée, la chute d'enthalpie à la turbine peut être diminuée par réduction de la puissance mécanique fournie au système.

A la figure 3 on a représenté une variante du climatiseur représentée à la figure 1 qui peut être appliquée à la présente invention. Dans cette variante l'extracteur d'eau 25 permet par des canalisations 45, de prélever du liquide de condensation que l'on projette par des pulvérisateurs 41, 46 dans les pipes d'entrée 42 ou 47 d'échangeurs 23 ou 49. A l'échangeur 23 le pulvérisateur 41 permet d'extraire des calories du flux d'air entrant dans l'échangeur 23. Dans l'installation représentée à la figure 3, on a rajouté un second échangeur 49 à la sortie du dessiccateur 26.

Les entrées de refroidissement des deux échangeurs 23 et 49, qui sont les entrées 42 et 47, son connectées ensemble à la pipe 31 de mélange d'air vicié de l'enceinte à climatiser 30 et d'air extérieur fourni par une pipe 31a. De même, les sorties 43, 48 de ces deux échangeurs sont connectées ensemble à la canalisation 32 qui va vers le ventilateur d'aspiration. Le flux de refroidissement traversant les échangeurs suivent donc deux chemins parallèles.

Cette disposition permet d'extraire l'eau contenue dans l'atmosphère soufflée dans l'enceinte suivant une méthode différente de l'art antérieur et bien supérieure en performances.

Une mesure de la performance peut être qu'à conditions égales de pression, température et débit à la sortie des échangeurs 4 ou 26, l'enthalpie du mélange eau-air contenu dans l'atmosphère soufflée dans l'enceinte soit le plus bas possible pour extraire le plus de chaleur possible de l'enceinte à température égale.

L'évolution des pressions et enthalpies dans un cas courant est indiqué dans un tableau ci-après. Le tableau permet de comparer cette évolution pour un certain nombre de paramètres concernant des organes de la figure 1 pour l'art antérieur et de la figure 3 pour l'invention. Les références de ces organes sont rappelées.

Dans le tableau, on a utilisé mob pour millibar comme sous multiple de l'unité de pression, g/kg comme pour gramme de vapeur d'eau par kilogramme d'air humide comme mesure de la teneur en vapeur d'eau, KJ/kg pour kilojoules par kilogrammes comme unité d'enthalpie et °C pour l'unité de température.

| Paramètres | Réf. | Art Antérieur | Réf. | Invention |
|---|---|---|---|---|
| Pression entrée turbine | 8 | 4 000 mb | 28 | 3 800 mb |
| Température entrée turbine | 8 | 48°C | 28 | 48°C |
| Teneur en vapeur d'eau à l'entrée de | 8 | 18g/kg | 28 | 6g/kg |
| Enthalpie entrée turbine | 8 | 93KJ/kg | 28 | 64KJ/kg |
| Pression sortie turbine | 8 | 1 150 mb | 28 | 1 050 mb |
| Chute d'enthalpie dans la zone | 8 | 77KJ/kg | 28 | 79KJ/kg |
| Enthalpie à l'entrée de l'enceinte | 10 | 16KJ/kg | 30 | -15 KJ/kg |
| Enthalpie à la sortie de l'enceinte | 10 | 39KJ/kg | 30 | 39KJ/kg |
| Capacité de réfrigération | | 23KJ/kg | | 54KJ/kg |

La capacité de réfrigération est doublée par l'invention pour une même dépense d'énergie.

Un problème particulier d'utilisation d'un dessiccateur provient du fait que le dessiccateur est utilisé en adsorption. Il faut donc le régénérer périodiquement en fonction de la charge qu'il dessèche. La régénération d'un dessiccateur par exemple du genre à tamis moléculaire est la plupart du temps réalisée par un échauffement. Pour réaliser une telle fonction différents moyens, comme une résistance chauffante, sont envisagés dans l'art antérieur de la dessiccation. Afin de ne pas diminuer le bilan énergétique, la présente invention propose une disposition particulièrement avantageuse à la figure 4. Selon ce mode de réalisation, le dessiccateur est constitué par un organe 50 comportant deux parties dessiccatrices 51 et 55. Ce système 50 est interposé entre l'échangeur 23 et le compresseur d'une part entre l'échangeur 23 et la turbine de détente d'autre part. Sur la canalisation d'entrée 22 de l'échangeur, on place la partie dessiccatrice 51 en

3

régénération. En effet, la partie dessiccatrice 55 qui est connectée en sortie de l'échangeur, est traversée par une atmosphère plus froide que l'atmosphère échauffée par la compression traversant la partie 51 en régérénation. On conçoit qu'il puisse alors se produire une vaporisation de l'humidité contenue par adsorption dans le dessiccateur 51. L'eau vaporisée ajoutée à l'humidité de l'air à refroidir est condensée ensuite dan l'échangeur 23 et extraite par un extracteur d'eau 25. On peut régénérer ainsi la partie dessiccatrice 51 pendant que la partie dessiccatrice 55 fonctionne en adsorption puis intervertir les rôles de 51 et 55.

On a représenté aussi un moyen pour éviter le givrage des dessiccateurs 51 ou 55. Pour réaliser ce dégivrage, on a proposé de disposer une vanne qui reinjecte, périodiquement ou sur commande d'un opérateur, le flux d'air de sortie d'un dessiccateur.

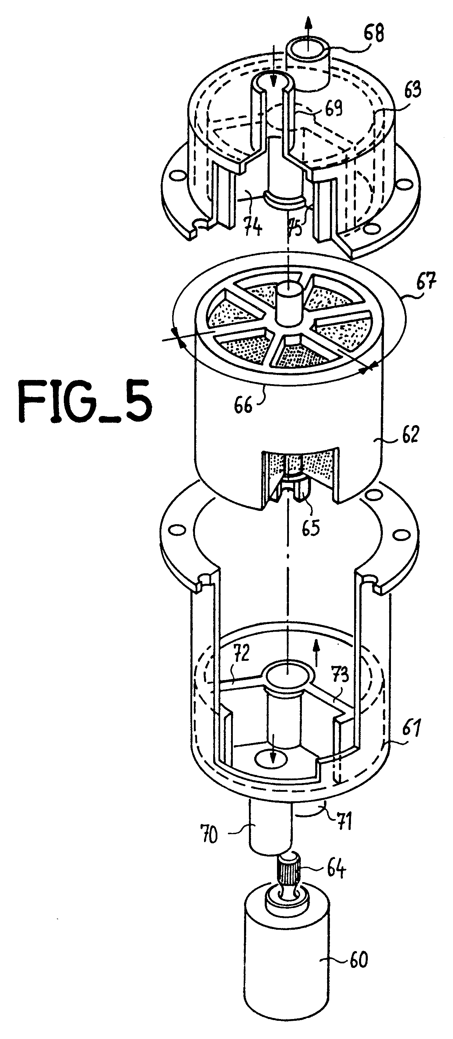

A la figure 5 on a représenté un mode de réalisation d'un dispositif dessiccateur selon la figure 4. Un tel dispositif comporte un moteur 60 destiné à actionner un tambour 62 contenant le dessiccateur. Le tambour 62 est contenu dans une cuve 61. La cuve 61 est fermée par un chapeau 63 qui comporte deux tubulures 68 et 69 qui correspondent axialement aux tubulures 70 et 71 en provenance, la première 71 du premier compresseur, la seconde 70 fournissant un flux d'atmosphère séchée vers l'échangeur numéro deux. Sur le trajet aller entrant par la canalisation 71 le flux d'atmosphère rencontre une partie 67 du dessiccateur en cours de régénération tandis que ce flux part vers l'entrée du premier échangeur par la sortie 68. La sortie du premier échangeur est connectée à l'entrée 69 qui fournit un flux d'atmosphère à la partie 66 en adsorption du dessiccateur. La sortie de la partie en adsorption du dessiccateur est en relation avec la pipe 70 de sortie du dispositif de dessiccation.

La cuve et le chapeau de cuve comporte des cloisons 72 à 75 qui permettent d'isoler les flux d'atmosphère traversant le dessiccateur. Dans un exemple de réalisation préféré le tambour de dessication comporte six secteurs ou sections angulairement répartis sur 360°. Deux des secteurs sont associés à la partie 66 en adsorption tandis que quatre secteurs sont associés à la partie 67 en régénération. Les cloisons 72 et 73 du fond de la cuve 61 sont donc disposées séparées de 120° en regard de la partie en adsorption tandis que les parois 73 et 75 du chapeau répètent cette disposition au-dessus de la partie en adsorption.

Dans une variante non représentée aux figures, on ajoute un extracteur de liquide de condensation à la sortie de l'échangeur 49. Le liquide recueillie comme de l'eau, dans le cas habituel de l'air atmosphérique, est prélevé et renvoyé dans le réseau de pulvérisation 45.

Dans une variante, le dessiccateur est contenu dans deux récipients fixes et le passage en position dessiccateur et régénération se fait par un jeu de vannes faisant travailler chaque récipient alternativement suivant les deux modes. On dispose ainsi de la possibilité de faire un travail en adsorption ou en régénération. Le travail de régénération peut être exécuté par utilisation d'air chaud du circuit décrit ci-dessus ou d'air chaud ou d'un autre flux convenable provenant d'une appareil de régénération.

On remarque que, comme selon le mode de réalisation de la figure 5, la durée de régénération peut être plus longue que celle d'adsorption, selon les conditions d'utilisation. La motorisation permet ainsi d'amener chaque section du tambour successivement dans une zone de régénération, d'autres sections travaillant en adsorption dans la zone complémentaire d'adsorption, l'ensemble cuve et chapeau créant par les cloisons 72-75 cette répartition en deux zones. Dans un mode de réalisation cette répartition peut être commandée en cours de travail par articulation des deux couples de cloisons.

## Revendications

1. Dispositif de conditionnement d'air d'une enceinte d'aéronef comportant, mis en série, un compresseur (21), un échangeur (23), un dessiccateur (50), un extracteur d'eau (25) et une turbine de détente (28), le dessiccateur (50) comprenant au moins deux parties dessiccatrices (51, 55), caractérisé en ce qu'il comporte des moyens pour diriger successivement la totalité de l'air de refroidissement provenant du compresseur à travers :
   - la première partie du dessiccateur (51 ou 55) pour régénérer celui-ci ;
   - l'échangeur de chaleur (23) ;
   - l'extracteur d'eau (25) ;
   - la deuxième partie du dessiccateur (55 ou 51) pour obtenir une dessiccation complète d'air ;
   lesdits moyens permettant d'échanger la première partie du dessiccateur (51 ou 55) avec la deuxième partie (55 ou 51).

2. Dispositif selon la revendication 1, caractérisé en ce qu'il comporte à la sortie du dessiccateur (50) un échangeur (49) destiné à abaisser la température du flux d'atmosphère à climatiser avant sa détente dans la turbine (28).

3. Dispositif selon la revendication 2, caractérisé en ce que les échangeurs (23 ou 49) reçoivent comme fluide de refroidissement une partie de l'atmosphère viciée de l'enceinte (31) climatisée, cette atmosphère étant aspirée par un ventilateur (33) et éventuellement mélangée (31a) à de l'atmosphère extérieure.

4. Dispositif selon la revendication 2 ou 3, caractérisé en ce qu'il comporte un extracteur de liquide de condensation disposé entre l'échangeur (49) et la turbine (28).

5. Dispositif selon la revendication 2, 3, ou 4, caractérisé en ce que le liquide de condensation issu des extracteurs (comme 25) est pulvérisé pour refroidir les échangeurs (23 ou 49).

6. Dispositif selon la revendication 1, caractérisé en ce que le dessiccateur comporte un tambour (62) mobile sur un axe, comportant des secteurs cycliquement disposés en adsorption (66) puis en régénération (66).

7. Dispositif selon la revendication 1, caractérisé en ce que le tambour est disposé dans une cuve (61) et un chapeau (63) à l'intérieur desquels il tourne pour présenter cycliquement chacune de ses sections dans une zone de régénération (67) ou en adsorption (66), les deux zones étant limitées par des cloisons (72-75) et recevant des canalisations (68-72) d'un flux convenable.

8. Dispositif selon la revendication 7, caractérisé en ce que le tambour (62) est motorisé (60) à travers (64, 65) la cuve (61) de façon à amener successivement chaque section du tambour dans la zone de régénération.

9. Dispositif selon les revendications 2 à 8, caractérisé en ce que pour éviter la formation de givre dans les dessiccateurs, on dispose sur chaque dessiccateur une vanne pour réinjecter périodiquement ou à la demande du flux de sortie du dessiccateur.

**Claims**

1. An air conditioning device for an enclosed space of an aircraft, comprising, placed in series, a compressor (21), an exchanger (23), a dryer (50), a water extractor (25) and an expansion turbine (28), said dryer (50) comprising at least two drying parts (51 and 55), characterized in that it comprises means in order to successively direct all the coolant air coming from the compressor through:
   - the first part of the dryer (51 or 55) to regenerate the same;
   - the heat exchanger (23);
   - the water extractor (25);
   - the second part of the dryer (55 or 51) in order to cause complete drying of the air;
   the said means rendering possible an exchange of the first part of the drying action (51 or 55) for the second part (55 or 51).

2. The device as claimed in claim 1, characterized in that at the outlet of the dryer (50) it comprises an exchanger (49) adapted to lower the temperature of the flow of air to be conditioned before the release thereof into the turbine (28).

3. The device as claimed in claim 2, characterized in that the exchangers (23 or 49) as coolant fluid receive a part of the spent air from the air conditioned enclosure (31), said air being aspirated by a fan (33) and if desired mixed (31a) with some exterior air.

4. The device as claimed in claim 2 or in claim 3, characterized in that it comprises a condensed liquid extractor positioned between the exchanger (49) and the turbine (28).

5. The device as claimed in claim 2, claim 3 or claim 4, characterized in that the condensed liquid coming from the extractors (such as 25) is atomized in order to cool the exchangers (23 or 49).

6. The device as claimed in claim 1, characterized in that the dryer comprises a drum (62) adapted to move about an axis, comprising sectors cyclically placed for adsorption (66) and then regeneration (66).

7. The device as claimed in claim 1, characterized in that the drum is placed in a tub (61) and a hood (63) inside of which each it turns to cyclically present each of its sections in a regeneration zone (67) or adsorption zone (66), the two zones being delimited by partitions (27 through 75) and having ducts (68 through 72) for a suitable flow rate.

8. The device as claimed in claim 7, characterized in that the drum (62) is motor driven (60) through (64 and 65) the tub (61) in such a manner that each section of the drum is moved into the regeneration zone.

9. The device as claimed in any one of the preceding claims 2 through 8, characterized in that in order to avoid the formation of frost in the dryers each dryer is provided with a valve to inject the flow from the dryer periodically or on demand.

**Patentansprüche**

1. Klimatisierungseinrichtung für eine Luftfahrzeug- Kabine, mit einem Kompressor (21), einem Austauscher (23), einem Trockner (50), einem Wasserextraktor (25) und einer Expansionsturbine (28), die sämtlich in einer Reihe angeordnet sind, wobei der Trockner wenigstens zwei Trocknerteile (51, 55) aufweist, dadurch gekennzeichnet, daß sie Mittel aufweist, um die gesamte vom Kompressor ausgehende Kühlungsluft nacheinander durch folgende Einrichtungen zu leiten:
   - den ersten Teil des Trockners (51 oder 55), um diesen zu regenerieren;
   - den Wärmeaustauscher (23);
   - den Wasserextraktor (25);
   - den zweiten Teil des Trockners (55 oder 51), um eine vollständige Trocknung der Luft zu erhalten;
   wobei die Mittel den Austausch des ersten Teils des Trockners (51 oder 55) gegen den zweiten Teil (55 oder 51) gestatten.

2. Einrichtung gemäß Anspruch 1, dadurch gekennzeichnet, daß sie am Ausgang des Trockners (50) einen Austauscher (49) aufweist, der dazu bestimmt ist, die Temperatur der Strömung der zu klimatisierenden Atmosphäre vor deren Expansion in der Turbine (28) abzusenken.

3. Einrichtung gemäß Anspruch 2, dadurch gekennzeichnet, daß die Austauscher (23 oder 49) als Kühlungsfluid einen Teil der verbrauchten Atmosphäre der klimatisierten Kabine (31) aufnehmen, wobei diese Atmosphäre von einem Ventilator (33) abgesaugt und eventuell mit der Außenatmosphäre gemischt (31a) wird.

4. Einrichtung gemäß Anspruch 2 oder 3, dadurch gekennzeichnet, daß sie einen Kondensationsflüssigkeits-Extraktor umfaßt, der zwischen dem Austauscher (49) und der Turbine (28) angeordnet ist.

5. Einrichtung gemäß Anspruch 2, 3 oder 4, dadurch gekennzeichnet, daß die von den Extraktoren (wie etwa 25) abgeleitete Kondensationsflüssigkeit zerstäubt wird, um die Austauscher (23 oder 49) abzukühlen.

6. Einrichtung gemäß Anspruch 1, dadurch gekennzeichnet, daß der Trockner eine auf einer Achse bewegliche Trommel (62) aufweist, die Sektoren besitzt, die zyklisch in Adsorption (66), dann in Regeneration (67) angeordnet sind.

7. Einrichtung gemäß Anspruch 1, dadurch gekennzeichnet, daß die Trommel in einem Gefäß (61) und einer Kappe (63) angeordnet ist, in denen sie sich dreht, um jeden ihrer Abschnitte in eine Regenerationszone (67) oder Adsorptionszone (66) einzuführen, wobei die zwei Zonen durch Zwischenwände (72 - 75) begrenzt werden und Leitungen (68 - 72) einer geeigneten Strömung aufnehmen.

8. Einrichtung gemäß Anspruch 7, dadurch gekennzeichnet, daß die Trommel (62) durch das Gefäß (61) hindurch (64, 65) angetrieben (60) wird, derart, daß nacheinander jeder Abschnitt der Trommel in die Regenerationszone geführt wird.

9. Einrichtung gemäß den Ansprüchen 2 bis 8, dadurch gekennzeichnet, daß zur Vermeidung einer Vereisung in den Trocknern in jedem Trockner ein Schieber angeordnet ist, um periodisch oder auf Anforderung die Ausgangsströmung des Trockners erneut einzuleiten.

# FIG_1

# FIG_2

# FIG_3

# FIG_4

FIG_5